# FASCICULE DE BREVET EUROPEEN

(11) **EP 4 154 344 B1**
(45) Date de publication et mention de la délivrance du brevet: **30.04.2025**
(21) Numéro de dépôt: 21727847.2
(22) Date de dépôt: 20.05.2021
(51) Int. Cl.: H01M 10/04, H01M 50/503, H01M 50/507, H01M 50/516, H01M 50/533, H01M 50/536, H01M 50/538, H01M 50/54

(54) **ENSEMBLE ÉLECTROCHIMIQUE, BATTERIE ET PROCÉDÉ CORRESPONDANTS**
ELEKTROCHEMISCHE ANORDNUNG, ZUGEHÖRIGE BATTERIE UND VERFAHREN
ELECTROCHEMICAL ASSEMBLY, CORRESPONDING BATTERY AND METHOD

(30) Priorité: 20.05.2020 FR 2005291
(43) Date de publication de la demande: 29.03.2023
(73) Titulaire: SAFT, 92300 Levallois-Perret (FR)
(72) Inventeur: VEZAT, Christian, 33127 Saint Jean D'Illac (FR); BARDIAU, Maxence, 33185 Le Haillan (FR)
(74) Mandataire: Lavoix
(86) Numéro de dépôt international: PCT/EP2021/063508
(87) Numéro de publication internationale: WO 2021/234106

(56) Documents cités:
- EP-A1- 2 330 661
- US-A1- 2006 051 664
- US-A1- 2007 105 015

## Description

La présente invention concerne un ensemble électrochimique, du type comprenant les caractéristiques du préambule de la revendication 1.

On connait des ensembles électrochimiques, par exemple de US2019/0074487. L'ensemble électrochimique comprend deux empilements d'éléments électrochimiques dont chacun comprend une languette de connexion électrique. Les languettes sont disposées l'une sur l'autre et sont soutenues par une plaque de support disposée sur les deux empilements. Les languettes s'étendent de part et d'autre autour des chants de la plaque de support. Les languettes et la plaque de support sont empilées sur les deux empilements d'élément électrochimiques.

D'autres ensembles électrochimiques ou batteries électrochimiques sont connus de WO2018159618A1 ; EP3451409A1 ; WO2018126439A1 ; WO2018030570A1 ; US2016336574A1 ; CN205543009U ; EP2866279A1 ; EP2953186A1 ; EP2500964A2 ; US2011076532A1; KR101233626B1 ; US2007105015A1 ; EP2330661A1 et US2006051664A.

L'invention a pour but de proposer un ensemble électrochimique qui soit facile et économique à fabriquer. L'invention a notamment pour but de proposer une liaison fiable, économique et peu encombrante entre les électrodes et les bornes de l'ensemble électrochimique.

A cet effet, l'invention a pour objet un ensemble électrochimique comprenant les caractéristiques de la revendication 1.

Selon des modes de réalisation particuliers de l'ensemble électrochimique, celui-ci peut comporter l'une ou plusieurs des caractéristiques suivantes :
- la seconde languette de connexion électrique et la seconde nervure de connexion électrique s'étendent sensiblement parallèlement au plan d'empilement ;
- la première languette de connexion électrique et la première nervure de connexion électrique s'étendent sensiblement parallèlement au plan d'empilement ;
- l'âme centrale est disposée soit sensiblement perpendiculairement, soit sensiblement parallèlement à un plan de soutien défini par le premier élément de soutien et le second élément de soutien ;
- le premier élément de connexion commun est fixé à la première languette de connexion électrique par une liaison par matière, notamment par soudage par laser, et la première languette de connexion électrique est fixée au premier élément de soutien par une liaison par matière, notamment par soudage par laser,
et/ou
le premier élément de connexion commun est fixé à la seconde languette de connexion électrique par une liaison par matière, notamment par soudage par laser, et la seconde languette de connexion électrique est fixée au second élément de soutien par une liaison par matière, notamment par soudage par laser ;
   - le premier élément de connexion commun comprend une âme de connexion électrique disposée entre la première nervure de connexion électrique et la seconde nervure de connexion électrique ;
   - l'âme de connexion électrique est étagée et comprend une portion de borne et une portion de terminal, la portion de borne étant décalée vers l'empilement d'éléments électrochimiques par rapport à la portion de terminal ;
   - la première nervure de connexion électrique et la seconde nervure de connexion électrique sont disposées entre la première et la seconde languettes de connexion électrique, et dans lequel
la première languette de connexion électrique et la seconde languette de connexion électrique sont disposées entre le premier et le second éléments de soutien ;
   - le premier élément de soutien et le second élément de soutien sont disposés entre la première et la seconde languettes de connexion électrique, et dans lequel
la première languette de connexion électrique et la seconde languette de connexion électrique sont disposées entre la première nervure de connexion électrique et la seconde nervure de connexion électrique ;
   - le premier empilement d'éléments électrochimiques est muni d'une troisième languette de connexion électrique d'une seconde polarité, et
le second empilement d'éléments électrochimiques est muni d'une quatrième languette de connexion électrique de la seconde polarité,
l'ensemble électrochimique comprenant un second élément de connexion commun, reliant électriquement la troisième languette de connexion électrique et la quatrième languette de connexion électrique et adapté pour relier électriquement la troisième languette de connexion électrique et la quatrième languette de connexion électrique à une borne de connexion électrique de la seconde polarité,
le second élément de connexion commun comprend
   une troisième nervure de connexion électrique fixée à la troisième languette de connexion électrique, et
   une quatrième nervure de connexion électrique, fixée à la quatrième languette de connexion électrique, dans lequel
l'ensemble électrochimique comprend un second organe de soutien qui forme un troisième élément de soutien et un quatrième élément de soutien et qui comprend au moins une âme centrale disposée entre le troisième élément de soutien et le quatrième élément de soutien, dans lequel
la troisième languette de connexion électrique est disposée entre la troisième nervure de connexion électrique et le troisième élément de soutien, et
la quatrième languette de connexion électrique est disposée entre la quatrième nervure de connexion électrique et le quatrième élément de soutien, et notamment dans lequel
la troisième languette de connexion électrique et la troisième nervure de connexion électrique s'étendent sensiblement parallèlement au plan d'empilement et
la quatrième languette de connexion électrique et la quatrième nervure de connexion électrique s'étendent sensiblement parallèlement au plan d'empilement ;
   - le premier élément de connexion commun et le second élément de connexion commun ont une forme identique et sont disposés selon une configuration de symétrie de plan par rapport à un plan de symétrie.

L'invention a en outre pour objet une batterie, du type comprenant :
- un carter,
- un couvercle muni d'une borne de connexion électrique d'une première polarité et de préférence d'une borne de connexion électrique d'une seconde polarité
- un ensemble électrochimique,
caractérisée en ce que
l'ensemble électrochimique est un ensemble électrochimique tel que défini ci-dessus, et en ce que
le premier élément de connexion commun est électriquement relié à la borne de connexion électrique de la première polarité.

L'invention a en outre pour objet un procédé de fabrication d'un ensemble électrochimique, comprenant les étapes suivantes :
- fourniture du premier empilement d'éléments électrochimiques muni de la première languette de connexion électrique de la première polarité,
- fourniture du premier élément de connexion commun adapté pour relier électriquement la première languette de connexion électrique à la borne de connexion électrique de la première polarité,
- disposition de la première languette de connexion électrique entre la première nervure de connexion électrique et le premier élément de soutien, et
- fixation et connexion de la première nervure de connexion électrique et du premier élément de soutien à la première languette de connexion électrique.

L'invention sera mieux comprise à la lecture de la description qui va suivre, donnée uniquement à titre d'exemple et faite en se référant aux dessins annexés, sur lesquels :
**[****Fig 1****]** La Figure 1 est une vue schématique en perspective et éclatée d'une batterie électrochimique selon un premier mode de réalisation de l'invention;
**[****Fig 2****]** La Figure 2 est une vue schématique de côté et éclatée de la batterie électrochimique selon le premier mode de réalisation de l'invention;
**[****Fig 3****]** La Figure 3 est une vue schématique de face et éclatée de la batterie électrochimique selon le premier mode de réalisation de l'invention;
**[****Fig 4****]** La Figure 4 est une vue schématique de côté et à l'état assemblé de la batterie électrochimique selon le premier mode de réalisation de l'invention ;
**[****Fig 5****]** La Figure 5 est une vue en coupe selon le plan V-V de la Figure 4 ;
**[****Fig 6****]** La Figure 6 est une vue agrandie du détail VI de la Figure 5 ;
**[****Fig 7****]** La Figure 7 est une vue schématique d'un détail d'une variante d'une batterie des Figures 1 à 6 ;
**[****Fig 8****]** La Figure 8 est une vue schématique en perspective et éclatée d'une batterie électrochimique selon un second mode de réalisation de l'invention;
**[****Fig 9****]** La Figure 9 est une vue schématique de côté et éclatée de la batterie électrochimique selon le second mode de réalisation de l'invention;
**[****Fig 10****]** La Figure 10 est une vue schématique de face et éclatée de la batterie électrochimique selon le second mode de réalisation de l'invention;
**[****Fig 11****]** La Figure 11 est une vue schématique de côté et à l'état assemblé de la batterie électrochimique selon le second mode de réalisation de l'invention ;
**[****Fig 12****]** La Figure 12 est une vue en coupe selon le plan XII-XII de la Figure 11 ; et
**[****Fig 13****]** La Figure 13 est une vue agrandie du détail XIII de la Figure 12.

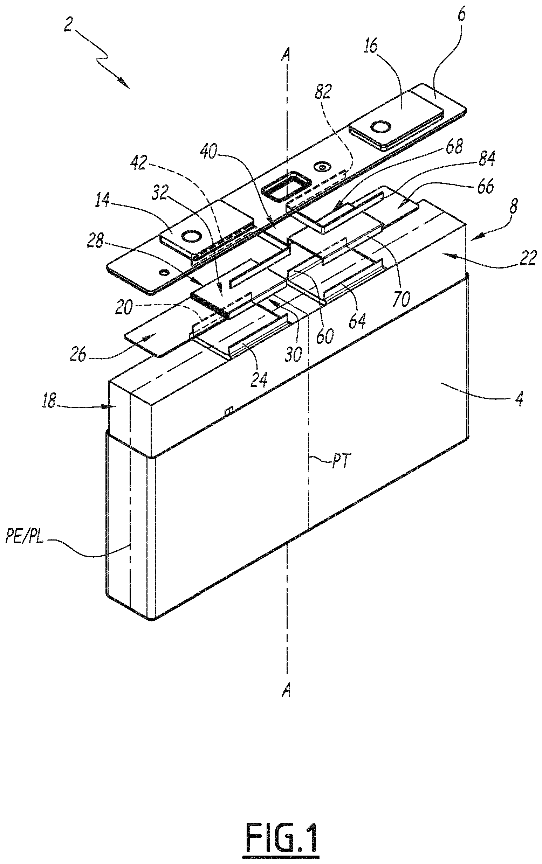

Sur la Figure 1 est représentée une batterie selon l'invention, désignée par la référence générale 2. Sur cette figure, la batterie 2 est montrée en perspective, à l'état éclatée.

La batterie 2 est une batterie électrochimique, telle qu'utilisée dans les véhicules électriques. Toutefois, d'autres domaines d'application de la batterie 2 sont envisageables, tels que le stockage d'énergie, la mobilité électrique, l'aviation, le ferroviaire.

La batterie 2 comprend un carter 4, un couvercle 6 et un ensemble électrochimique 8.

La batterie 2, et donc l'ensemble électrochimique 8 définit les entités géométriques suivantes :
PL - plan longitudinal - un plan qui s'étend généralement parallèlement à des grandes faces du carter et perpendiculairement à un fond du carter ;
PT - plan transversal - un plan qui s'étend généralement parallèlement à des petites faces du carter et perpendiculairement au fond du carter ;
PE - plan d'empilement - plan sur lequel sont empilées les couches d'électrode ;
A - axe central - l'axe passant par le centre de la batterie et généralement coïncidant avec la droite générée par la coupe du plan longitudinal PL et du plan transversal PT.

Le ou chacun des plans PL/PT/PE s'étend en l'occurrence dans un plan de symétrie correspondant de la batterie.

Le couvercle 6 est muni d'une borne de connexion électrique d'une première polarité 14 et d'une borne de connexion électrique d'une seconde polarité 16. Le couvercle 6 est en l'occurrence une plaque sensiblement rectangulaire.

L'ensemble électrochimique 8 comprend un premier empilement d'éléments électrochimiques 18 qui est muni d'une première languette de connexion électrique 20. L'ensemble électrochimique 8 comprend un second empilement d'éléments électrochimiques 22 qui est muni d'une seconde languette de connexion électrique 24. Chaque empilement d'éléments électrochimiques est communément appelé « Stack ».

Le premier empilement d'éléments électrochimiques 18 et le second empilement d'éléments électrochimiques 22 sont disposés dans le carter 4 et sont électriquement reliés l'un à l'autre selon une connexion électrique en parallèle.

La batterie 2 peut comprendre un nombre quelconque d'éléments électrochimiques 8.

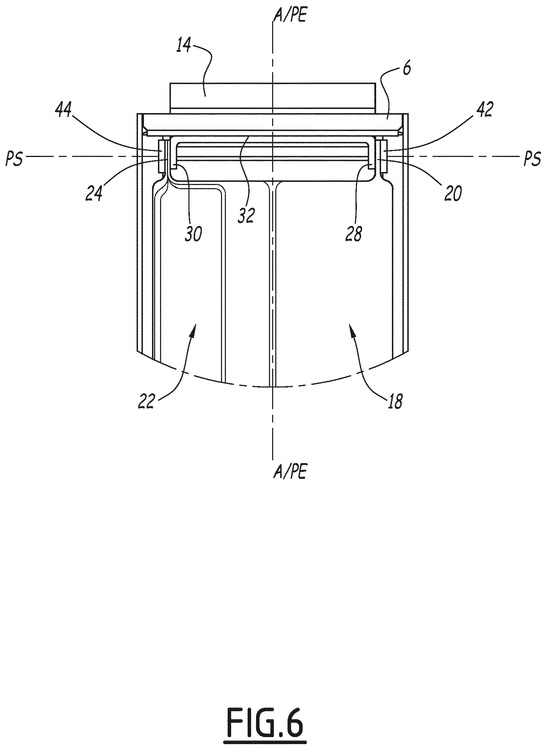

La première languette de connexion électrique 20 est formée d'une superposition de feuillards en métal qui sont reliés ou formés d'un seul tenant avec des collecteurs de courant du premier empilement d'éléments électrochimiques 18. La deuxième languette de connexion électrique 24 est formée d'une superposition de feuillards en métal qui sont reliés ou formés d'un seul tenant avec des collecteurs de courant du second empilement d'éléments électrochimiques 22. Ceci est représenté schématiquement sur la Figure 6.

La première languette de connexion électrique 20 s'étend sensiblement parallèlement au plan d'empilement PE. La seconde languette de connexion électrique 24 s'étend sensiblement parallèlement au plan d'empilement PE. Le terme « sensiblement parallèlement » s'entend d'un parallélisme aux tolérances de fabrication près, par exemple compris entre 0° et 3°.

La ou chacune des languettes de connexion électrique est une languette non-pliée et est sensiblement plane sur toute son étendue.

Le premier empilement d'éléments électrochimiques 18 et le second empilement d'éléments électrochimiques 22 s'étendent de part et d'autre du plan d'empilement PE.

La première languette de connexion électrique 20 et/ou la seconde languette de connexion électrique 24 sont disposées sur l'empilement d'éléments électrochimiques correspondant du côté éloigné de l'autre empilement d'éléments électrochimiques. La première languette de connexion électrique 20 et/ou la seconde languette de connexion électrique 24 sont donc disposées plus proche d'une face libre de l'empilement d'éléments électrochimiques adjacente au carter 4 que du plan longitudinal PL.

L'ensemble électrochimique 8 comprend un premier élément de connexion commun 26 (aussi appelé « linguet » ou « collector »), reliant électriquement la première languette de connexion électrique 20 et la seconde languette de connexion électrique 24. Le premier élément de connexion 26 est par exemple formé d'une tôle pliée.

L'élément de connexion commun 26 est fixé et connecté électriquement à la borne de connexion électrique 14 et relie électriquement la première languette de connexion électrique 20 et la seconde languette de connexion électrique 24 à la borne de connexion électrique 14.

Le premier élément de connexion commun 26 comprend une première nervure de connexion électrique 28 fixée à la première languette de connexion électrique 20, et une seconde nervure de connexion électrique 30, fixée à la seconde languette de connexion électrique 24. D'une manière générale, chacune des nervures de connexion électrique a une épaisseur plus importante que la languette de connexion électrique, respectivement que chacun des feuillards de la languette de connexion électrique, à laquelle cette nervure est associée et fixée.

Le premier élément de connexion commun 26 comprend une âme de connexion électrique 32 disposée entre la première nervure de connexion électrique et la seconde nervure de connexion électrique

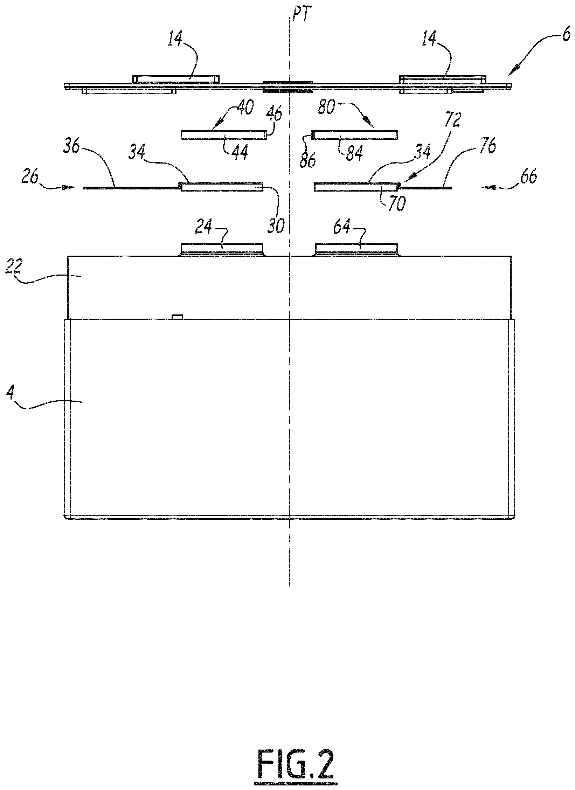

L'âme de connexion électrique 32 comprend une portion de terminal 34 et une portion de borne 36, la portion de borne étant décalée vers l'empilement d'éléments électrochimiques 22 par rapport à la portion de terminal 24. En l'occurrence, l'âme de connexion électrique 32 est étagée (voir Figure 2).

La première nervure de connexion électrique 28 et la seconde nervure de connexion électrique 30 sont disposées entre la première et la seconde languette de connexion électrique 20, 24.

La première nervure de connexion électrique 28 s'étend sensiblement parallèlement au plan d'empilement PE. La seconde nervure de connexion électrique 30 s'étend sensiblement parallèlement au plan d'empilement PE.

Comme visible sur les Figures 1 et 2, la première nervure de connexion électrique 28, la première languette de connexion électrique 20, la seconde nervure de connexion électrique 30, la seconde languette de connexion électrique 24 sont décalées de la portion de terminal 36 respectivement du terminal 14 associé. Ceci conduit à une structure compacte de la batterie 2.

Le carter 4 est par exemple un carter parallélépipédique rectangulaire et formé de métal ou d'un matériau thermoplastique. En variante, le carter 4 a une forme cylindrique à section circulaire. Le carter 4 a des parois qui sont moins déformables que les parois des empilements d'éléments électrochimiques 18 et 22.

En outre, l'ensemble électrochimique comprend un premier organe de soutien 40, notamment monobloc, qui forme un premier élément de soutien 42, un second élément de soutien 44 et qui comprend une âme centrale 46 disposée entre le premier élément de soutien et le second élément de soutien.

Le premier élément de soutien 42 et le second élément de soutien 44 définissent un plan de soutien PS, qui s'étend perpendiculairement au plan d'empilement PE et perpendiculairement au plan transversal PT (voir Figure 6). Le plan de soutien PS est généralement un plan dans lequel se trouvent le premier élément de soutien 42 et le second élément de soutien 44.

La première languette de connexion électrique 20 est disposée entre la première nervure de connexion électrique 28 et le premier élément de soutien 42. La seconde languette de connexion électrique 24 est disposée entre la seconde nervure de connexion électrique 30 et le second élément de soutien 44. Le premier élément de soutien 42 et/ou le second élément de soutien 44 est par exemple chacun une languette de soutien, notamment s'étendant parallèlement à la languette de connexion électrique 20, 24 associée. En variante, le premier élément de soutien 42 et/ou le second élément de soutien 44 ont une forme différente d'une forme de languette. D'une manière générale, chacun des éléments de soutien a une épaisseur plus importante que la languette de connexion électrique, respectivement que chacun des feuillards de la languette de connexion électrique, à laquelle cet élément de soutien est associé et fixé.

Chaque élément de soutien est adapté pour soutenir la languette de connexion électrique et la nervure de connexion électrique associée lors de l'opération de fixation de la languette de connexion électrique à la nervure de connexion électrique associé. En particulier, les éléments de soutien évitent la déformation de l'ensemble languette de connexion électrique/nervure de connexion électrique lors de l'opération de soudage ou brasage. De plus, les éléments de soutien réduisent le risque de formation de trous dans les languettes de connexion lors de l'opération de soudage ou de brasage.

La nervure de connexion électrique, la languette de connexion électrique et l'élément de soutien associés forment donc une structure de sandwich.

En l'occurrence, l'âme centrale 46 est disposée sensiblement perpendiculairement, au plan de soutien PS.

En l'occurrence, la première languette de connexion électrique 20 et la seconde languette de connexion électrique 24 sont disposées entre le premier et le second élément de soutien 42, 44 (voir Figure 6).

Le premier élément de connexion commun 26 est fixé à la première languette de connexion électrique 20 par une liaison par matière, notamment par soudage par laser.

La première languette de connexion électrique 20 est fixée au premier élément de soutien 42 par une liaison par matière, notamment par soudage par laser, et en particulier par la même liaison par matière que le premier élément de connexion commun.

Le premier élément de connexion commun 26 est fixé à la seconde languette de connexion électrique 24 par une liaison par matière, notamment par soudage par laser. La seconde languette de connexion électrique 24 est fixée au second élément de soutien 44 par une liaison par matière, notamment par soudage par laser, et en particulier par la même liaison par matière que le premier élément de connexion commun.

La structure des languettes de connexion électrique et de l'élément de connexion électrique relie les empilements d'éléments électrochimiques le long des languettes d'une manière peu encombrante selon l'axe central A-A.

La structure de la batterie 2 est sensiblement symétrique.

Les éléments décrits ci-dessus en association de la première polarité sont également présents en ce qui concerne la seconde polarité.

Plus précisément, le premier empilement d'éléments électrochimiques 18 est muni d'une troisième languette de connexion électrique 60 d'une seconde polarité, et le second empilement d'éléments électrochimiques 22 est muni d'une quatrième languette de connexion électrique 64 de la seconde polarité.

L'ensemble électrochimique comprend un second élément de connexion commun 66, reliant électriquement la troisième languette de connexion électrique 60 et la quatrième languette de connexion électrique 66 et adapté pour relier électriquement la troisième languette de connexion électrique et la quatrième languette de connexion électrique à la borne de connexion électrique 16 de la seconde polarité.

Le premier élément de connexion commun 26 et le second élément de connexion commun 66 ont une forme identique. Le second élément de connexion commun 66 a donc les mêmes caractéristiques structurelles que le premier élément de connexion commun 26.

Le second élément de connexion commun 66 comprend une troisième nervure de connexion électrique 68 fixée à la troisième languette de connexion électrique 60, et une quatrième nervure de connexion électrique 70, fixée à la quatrième languette de connexion électrique 64.

Le second élément de connexion commun 66 comprend une âme de connexion électrique 72 disposée entre la troisième nervure de connexion électrique et la quatrième nervure de connexion électrique

L'âme de connexion électrique 72 comprend une portion de terminal 74 et une portion de borne 76, la portion de borne 76 étant décalée vers l'empilement d'éléments électrochimiques 22 par rapport à la portion de terminal 24. En l'occurrence, l'âme de connexion électrique 72 est étagée (voir Figure 2).

L'ensemble électrochimique 8 comprend un second organe de soutien 80, notamment monobloc, qui forme un troisième élément de soutien 82 et un quatrième élément de soutien 84 et qui comprend au moins une seconde âme centrale 86 disposée entre le troisième élément de soutien et le quatrième élément de soutien.

La troisième languette de connexion électrique 60 est disposée entre la troisième nervure de connexion électrique 68 et le troisième élément de soutien, et la quatrième languette de connexion électrique 64 est disposée entre la quatrième nervure de connexion électrique 70 et le quatrième élément de soutien.

La troisième languette de connexion électrique 60 et/ou la troisième nervure de connexion électrique s'étendent sensiblement parallèlement au plan d'empilement (PE) et la quatrième languette de connexion électrique 64 et la quatrième nervure de connexion électrique s'étendent sensiblement parallèlement au plan d'empilement (PE).

Le premier élément de connexion commun 26 et le second élément de connexion commun 66 sont disposés selon une configuration de symétrie de plan par rapport à un plan de symétrie (PT).

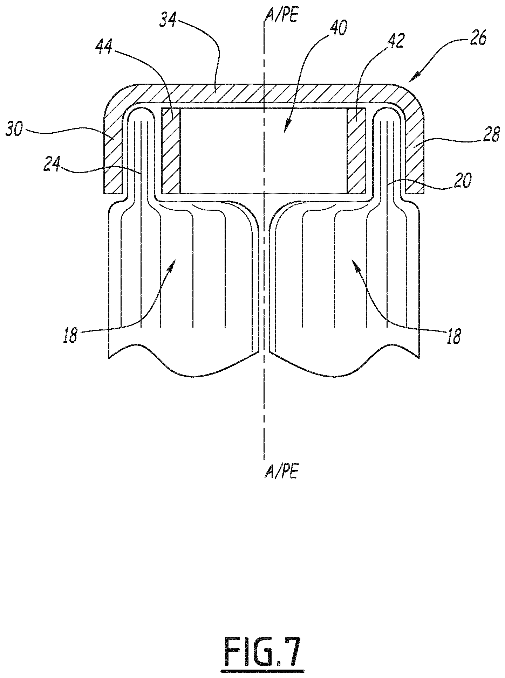

Sur la Figure 7 est représenté schématiquement une coupe d'un ensemble électrochimique selon une variante de la batterie selon l'invention ci-dessus. Cette variante diffère de ce qui a été décrit précédemment uniquement par ce qui suit. Les éléments analogues portent les mêmes références.

Le premier élément de soutien 42 et le second élément de soutien 44 sont disposés entre la première et la seconde languette de connexion électrique 20, 24. Également, la première languette de connexion électrique 20 et la seconde languette de connexion électrique 24 sont disposées entre la première nervure de connexion électrique 28 et la seconde nervure de connexion électrique 30.

En d'autres termes, le premier organe de soutien 40 est disposé entre la première nervure de connexion électrique 28 et la seconde nervure de connexion électrique 30. La configuration est donc inversée par rapport à celle de la Figure 6. De plus, le premier organe de soutien 40 a avantageusement la forme d'un cadre rectangulaire afin d'éviter une déformation lors de l'étape de fixation.

Il est à noter que le second organe de soutien 80 et le second élément de connexion commun 66 peuvent avoir une configuration identique à celle de cette Figure 7 ou la configuration de la Figure 6, décrite ci-dessus.

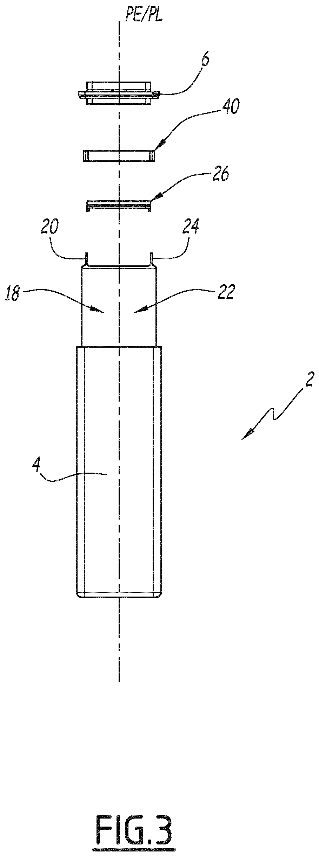

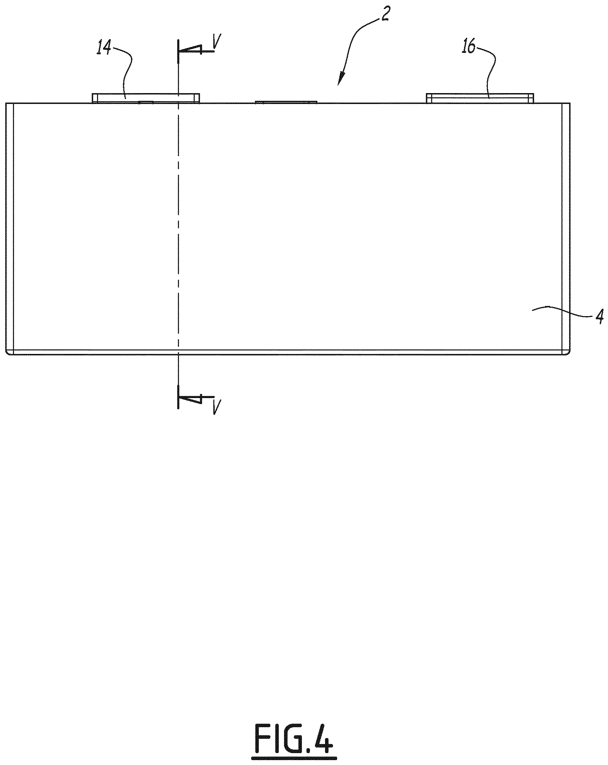

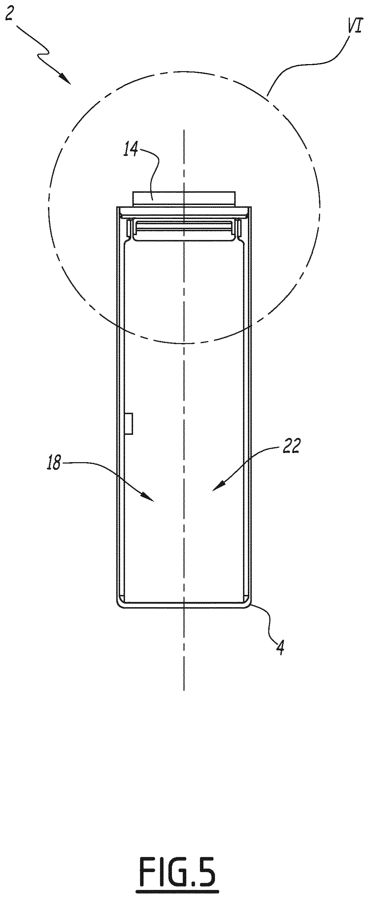

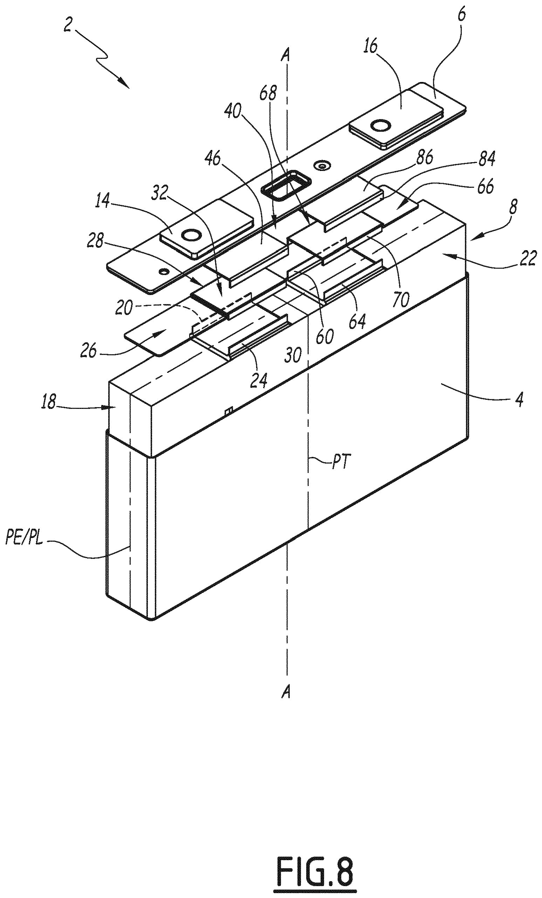

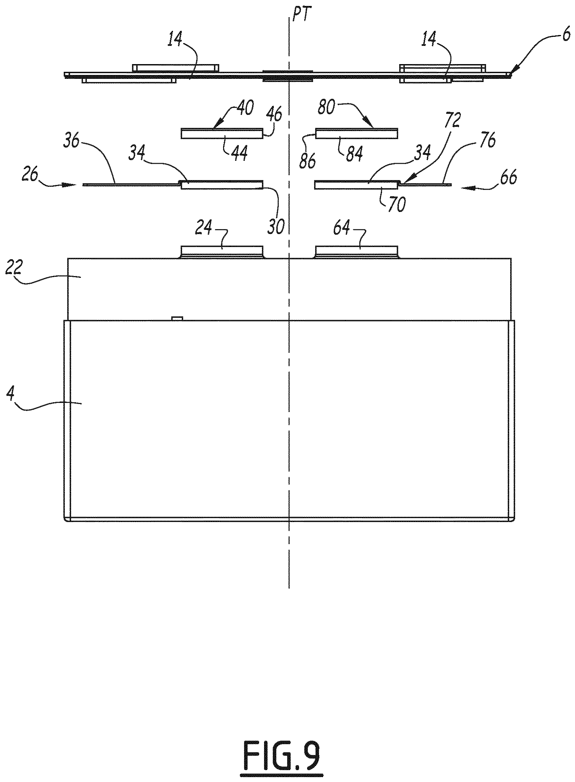

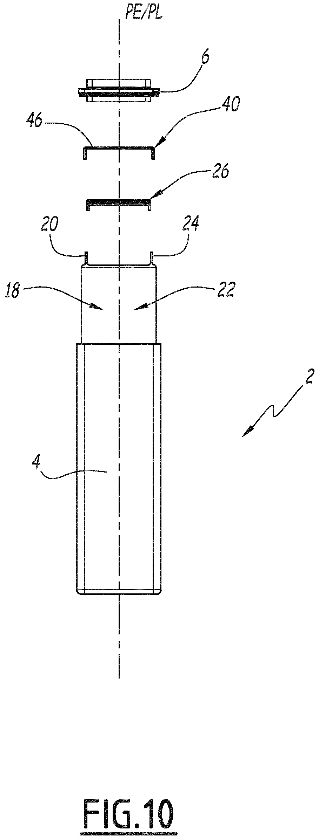

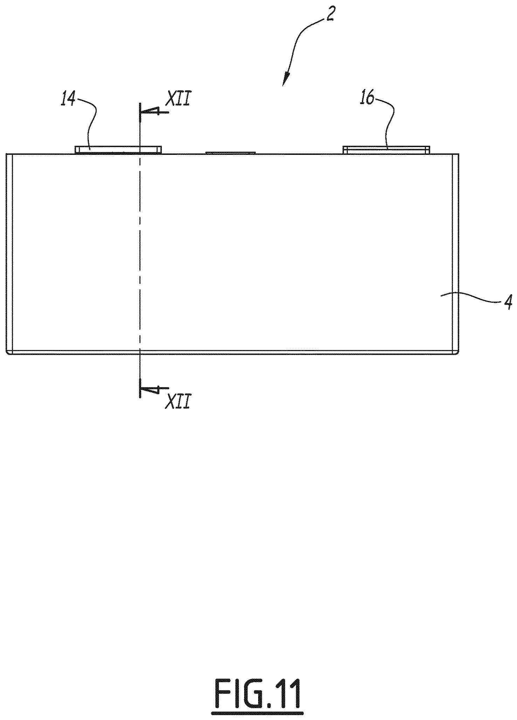

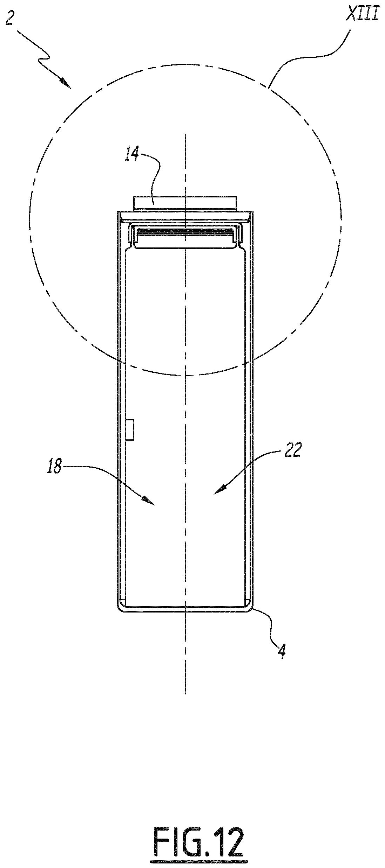

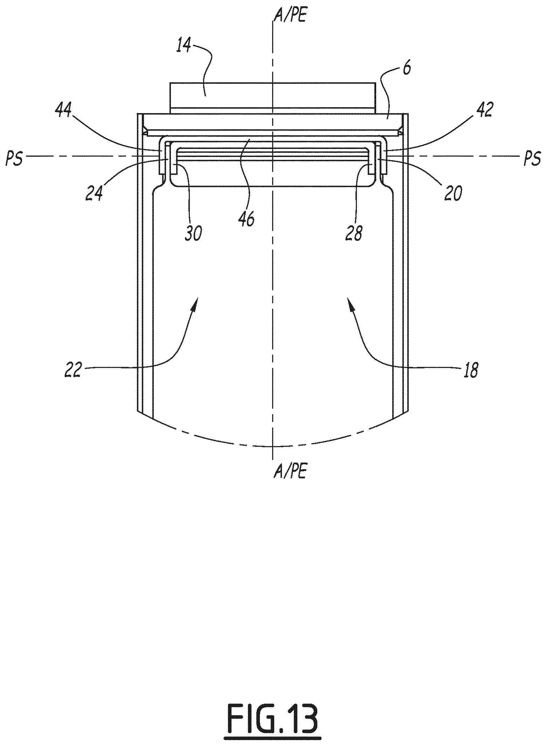

Sur les Figures 8 à 13 est représenté un second mode de réalisation de la batterie selon l'invention. Les Figures 8 à 13 correspondent aux Figures 1 à 7. Ce second mode de réalisation diffère du premier mode de réalisation uniquement par ce qui suit. Les éléments analogues portent les mêmes références.

L'âme centrale 46 du premier organe de soutien 40 est disposée sensiblement parallèlement au plan de soutien PS.

De même, l'âme centrale 86 du second organe de soutien 80 est disposée sensiblement parallèlement au plan de soutien PS.

Ainsi, l'âme centrale 46, respectivement 86, est reliée le long des bords longs des éléments de soutien 42, 44 respectivement 82, 84. Également, l'âme centrale 46, respectivement 86, recouvre la portion de terminal 34, respectivement 74, de l'âme de connexion électrique 32, respectivement 72, et s'étend parallèlement à celle-ci.

En variante de ce second mode de réalisation, les éléments de soutien 42, 44 et/ou 82, 84 peuvent être disposés comme sur la variante de la Figure 7.

En variante non représenté des modes de réalisations décrits ci-dessus, l'élément de connexion commun, par exemple l'élément 26, ne comprend qu'une seule nervure de connexion électrique, par exemple la nervure 28. Dans ce cas, soit un seul empilement d'éléments électrochimiques est connecté à l'élément de connexion commun, soit l'autre empilement d'élément électrochimiques est connecté par d'autres moyens à l'élément de connexion commun que par une nervure de connexion électrique.

De même, l'organe de soutien peut comprendre qu'un seul élément de soutien ou être formé par cet élément de soutien.

Ceci est par exemple applicable à des batteries 2 qui ne comportent qu'un seul empilement d'éléments électrochimique.

En variante, alternativement ou d'une manière supplémentaire, la ou chaque languette de connexion électrique et la nervure de connexion électrique associée s'étendent par rapport au plan d'empilement (PE) selon un angle compris entre 0° et 45°.

Le procédé de fabrication d'un ensemble électrochimique tel que défini ci-dessus comprend entre autres les étapes successive suivantes:
- fourniture du premier empilement d'éléments électrochimiques 18 muni de la première languette de connexion électrique 20 de la première polarité,
- fourniture du premier élément de connexion commun 26 adapté pour relier électriquement la première languette de connexion électrique à la borne de connexion électrique 14 de la première polarité,
- disposition de la première languette de connexion électrique 20 entre la première nervure de connexion électrique 28 et le premier élément de soutien 42,
- fixation et connexion de la première nervure de connexion électrique 28 et du premier élément de soutien 42 à la première languette de connexion électrique.

De préférence, lors de l'étape de fixation, la première languette de connexion électrique et la première nervure de connexion électrique s'étendent selon un angle soit parallèle, soit oblique (e.g. comprise entre 0° et 60°) au plan d'empilement PE.

Les mêmes étapes sont mises en œuvre pour le second empilement d'éléments électrochimiques muni de la seconde languette de connexion électrique et, le cas échéant, pour les éléments de la seconde polarité.

Dans ce cas, la fixation et connexion de la première nervure de connexion électrique 28 et du premier élément de soutien 42 à la première languette de connexion électrique et la fixation et connexion de la seconde nervure de connexion électrique 30 et du second élément de soutien 44 à la seconde languette de connexion électrique sont effectués simultanément.

La structure de la batterie est compacte tout en conduisant à une connexion électrique fiable entre les différents éléments. La batterie est également facile et économique à fabriquer, notamment en raison de la disposition des languettes de connexion électrique et des caractéristiques des éléments de connexion commun et des organes de soutien.

## Revendications

1. Ensemble électrochimique, du type comprenant
un premier empilement d'éléments électrochimiques (18) muni d'une première languette de connexion électrique (20) d'une première polarité,
le premier empilement d'éléments électrochimiques s'étendant selon un plan d'empilement (PE),
un premier élément de connexion commun (26) adapté pour relier électriquement la première languette de connexion électrique à une borne de connexion électrique (14) de la première polarité,
le premier élément de connexion commun comprenant une première nervure de connexion électrique (28) fixée à la première languette de connexion électrique,
l'ensemble électrochimique comprenant un premier élément de soutien (42),
la première languette de connexion électrique (20) étant disposée entre la première nervure de connexion électrique (28) et le premier élément de soutien (42), l'ensemble électrochimique comprenant
un second empilement d'éléments électrochimiques (22) muni d'une seconde languette de connexion électrique (24) de la première polarité,
le second empilement d'éléments électrochimiques s'étendant selon le plan d'empilement (PE),
le premier élément de connexion commun (26) reliant électriquement la première languette de connexion électrique et la seconde languette de connexion électrique et étant adapté pour relier la seconde languette de connexion électrique à la borne de connexion électrique (14) de la première polarité,
le premier élément de connexion commun (26) comprenant une seconde nervure de connexion électrique (30) fixée à la seconde languette de connexion électrique,
l'ensemble électrochimique comprenant un second élément de soutien (44),
la seconde languette de connexion électrique étant disposée entre la seconde nervure de connexion électrique et le second élément de soutien,
**caractérisé en ce que**
l'ensemble électrochimique comprend un premier organe de soutien (40) qui forme le premier élément de soutien et le second élément de soutien et qui comprend au moins une âme centrale (46) disposée entre le premier élément de soutien et le second élément de soutien.

2. Ensemble électrochimique, selon la revendication 1, dans lequel la première languette de connexion électrique et la première nervure de connexion électrique s'étendent sensiblement parallèlement au plan d'empilement (PE).

3. Ensemble électrochimique selon la revendication 1 ou 2, dans lequel
la seconde languette de connexion électrique et la seconde nervure de connexion électrique s'étendent sensiblement parallèlement au plan d'empilement (PE).

4. Ensemble électrochimique, selon l'une quelconque des revendications 1 à 3, dans lequel l'âme centrale est disposée soit sensiblement perpendiculairement, soit sensiblement parallèlement à un plan de soutien (PS) défini par le premier élément de soutien et le second élément de soutien.

5. Ensemble électrochimique, selon l'une quelconque des revendications 1 à 4, dans lequel
le premier élément de connexion commun (26) est fixé à la première languette de connexion électrique (20) par une liaison par matière, notamment par soudage par laser, et la première languette de connexion électrique (20) est fixée au premier élément de soutien par une liaison par matière, notamment par soudage par laser,
et/ou
le premier élément de connexion commun (26) est fixé à la seconde languette de connexion électrique (24) par une liaison par matière, notamment par soudage par laser, et la seconde languette de connexion électrique (24) est fixée au second élément de soutien par une liaison par matière, notamment par soudage par laser.

6. Ensemble électrochimique selon l'une quelconque des revendications précédentes, dans lequel le premier élément de connexion commun (26) comprend une âme de connexion électrique (32) disposée entre la première nervure de connexion électrique et la seconde nervure de connexion électrique.

7. Ensemble électrochimique, selon la revendication 6, dans lequel l'âme de connexion électrique (32) est étagée et comprend une portion de borne (36) et une portion de terminal (34), la portion de borne étant décalée vers l'empilement d'éléments électrochimiques par rapport à la portion de terminal.

8. Ensemble électrochimique, selon l'une quelconque des revendications 1 à 7, dans lequel
la première nervure de connexion électrique (28) et la seconde nervure de connexion électrique (30) sont disposées entre la première et la seconde languettes de connexion électrique, et dans lequel
la première languette de connexion électrique et la seconde languette de connexion électrique sont disposées entre le premier et le second éléments de soutien.

9. Ensemble électrochimique, selon l'une quelconque des revendications 2 à 7, dans lequel le premier élément de soutien (42) et le second élément de soutien (44) sont disposés entre la première et la seconde languettes de connexion électrique, et dans lequel
la première languette de connexion électrique (20) et la seconde languette de connexion électrique (24) sont disposées entre la première nervure de connexion électrique et la seconde nervure de connexion électrique.

10. Ensemble électrochimique, selon l'une quelconque des revendications précédentes, dans lequel
le premier empilement d'éléments électrochimiques est muni d'une troisième languette de connexion électrique (60) d'une seconde polarité, et
le second empilement d'éléments électrochimiques est muni d'une quatrième languette de connexion électrique (64) de la seconde polarité,
l'ensemble électrochimique comprenant un second élément de connexion commun (66), reliant électriquement la troisième languette de connexion électrique et la quatrième languette de connexion électrique et adapté pour relier électriquement la troisième languette de connexion électrique et la quatrième languette de connexion électrique à une borne de connexion électrique (16) de la seconde polarité,
le second élément de connexion commun comprend
une troisième nervure de connexion électrique (68) fixée à la troisième languette de connexion électrique, et
une quatrième nervure de connexion électrique (70), fixée à la quatrième languette de connexion électrique, dans lequel
l'ensemble électrochimique comprend un second organe de soutien (80) qui forme un troisième élément de soutien (82) et un quatrième élément de soutien (84) et qui comprend au moins une âme centrale (86) disposée entre le troisième élément de soutien et le quatrième élément de soutien, dans lequel
la troisième languette de connexion électrique est disposée entre la troisième nervure de connexion électrique (68) et le troisième élément de soutien (82), et
la quatrième languette de connexion électrique est disposée entre la quatrième nervure de connexion électrique (70) et le quatrième élément de soutien (84), et notamment dans lequel
la troisième languette de connexion électrique (60) et la troisième nervure de connexion électrique s'étendent sensiblement parallèlement au plan d'empilement (PE) et
la quatrième languette de connexion électrique (64) et la quatrième nervure de connexion électrique s'étendent sensiblement parallèlement au plan d'empilement (PE).

11. Ensemble électrochimique, selon la revendication 10, dans lequel le premier élément de connexion commun (26) et le second élément de connexion commun (66) ont une forme identique et sont disposés selon une configuration de symétrie de plan par rapport à un plan de symétrie (PT).

12. Batterie, du type comprenant
- un carter (4),
- un couvercle (6) muni d'une borne de connexion électrique (14) d'une première polarité et de préférence d'une borne de connexion électrique (16) d'une seconde polarité
- un ensemble électrochimique (8),
**caractérisée en ce que**
l'ensemble électrochimique (8) est un ensemble électrochimique selon l'une quelconque des revendications précédentes, et **en ce que**
le premier élément de connexion commun (26) est électriquement relié à la borne de connexion électrique (14) de la première polarité.

13. Procédé de fabrication d'un ensemble électrochimique selon l'une des revendications 1 à 11, comprenant les étapes suivantes :
- fourniture du premier empilement d'éléments électrochimiques (18) muni de la première languette de connexion électrique (20) de la première polarité,
- fourniture du premier élément de connexion commun (26) adapté pour relier électriquement la première languette de connexion électrique à la borne de connexion électrique (14) de la première polarité,
- disposition de la première languette de connexion électrique (20) entre la première nervure de connexion électrique (28) et le premier élément de soutien (42), et
- fixation et connexion de la première nervure de connexion électrique (28) et du premier élément de soutien (42) à la première languette de connexion électrique.

## Patentansprüche

1. Elektrochemische Anordnung der Art, umfassend:
einen ersten Stapel von elektrochemischen Elementen (18), ausgestattet mit einer ersten elektrischen Verbindungslasche (20) mit einer ersten Polarität,
wobei sich der erste Stapel von elektrochemischen Elementen gemäß einer Stapelebene (PE) erstreckt,
ein erstes gemeinsames Verbindungselement (26), das ausgelegt ist, um die erste elektrische Verbindungslasche elektrisch mit einer ersten elektrischen Verbindungsklemme (14) mit der ersten Polarität elektrisch zu verbinden,
wobei das erste gemeinsame Verbindungselement eine erste elektrische Verbindungsrippe (28) umfasst, die an die erste elektrische Verbindungslasche fixiert ist,
wobei die erste elektrochemische Anordnung ein erstes Stützelement (42) umfasst,
wobei die erste elektrische Verbindungslasche (20) zwischen der ersten elektrischen Verbindungsrippe (28) und dem ersten Stützelement (42) angeordnet ist, wobei die erste elektrochemische Anordnung Folgendes umfasst:
einen zweiten Stapel von elektrochemischen Elementen (22), der mit einer zweiten elektrischen Verbindungslasche (24) mit der ersten Polarität ausgestattet ist,
wobei sich der zweite Stapel von elektrochemischen Elementen gemäß der Stapelebene (PE) erstreckt,
wobei das erste gemeinsame Verbindungselement (26) die erste elektrische Verbindungslasche und die zweite elektrische Verbindungslasche elektrisch verbindet und ausgelegt ist, um die zweite elektrische Verbindungslasche mit der elektrischen Verbindungsklemme (14) mit der ersten Polarität zu verbinden,
wobei das erste gemeinsame Verbindungselement (26) eine zweite elektrische Verbindungsrippe (30) umfasst, die an die zweite elektrische Verbindungslasche fixiert ist,
wobei die elektrochemische Anordnung ein zweites Stützelement (44) umfasst,
wobei die zweite elektrische Verbindungslasche zwischen der zweiten elektrischen Verbindungsrippe und dem zweiten Stützelement angeordnet ist,
**dadurch gekennzeichnet, dass**
die elektrochemische Anordnung ein erstes Stützorgan (40) umfasst, das das erste Stützelement und das zweite Stützelement bildet, und das mindestens einen zentralen Kern (46) umfasst, der zwischen dem ersten Stützelement und dem zweiten Stützelement angeordnet ist.

2. Elektrochemische Anordnung nach Anspruch 1, wobei die erste elektrische Verbindungslasche und die erste elektrische Verbindungsrippe sich im Wesentlichen parallel zu der Stapelebene (PE) erstrecken.

3. Elektrochemische Anordnung nach Anspruch 1 oder 2, wobei
die zweite elektrische Verbindungslasche und die zweite elektrische Verbindungsrippe sich im Wesentlichen parallel zur Stapelebene (PE) erstrecken.

4. Elektrochemische Anordnung nach einem der Ansprüche 1 bis 3, wobei der zentrale Kern entweder im Wesentlichen senkrecht oder im Wesentlichen parallel zu einer Stützebene (PS) angeordnet ist, die von dem ersten Stützelement und dem zweiten Stützelement definiert ist.

5. Elektrochemische Anordnung nach einem der Ansprüche 1 bis 4, wobei
das erste gemeinsame Verbindungselement (26) an die erste elektrische Verbindungslasche (20) durch eine Materialverbindung fixiert ist, insbesondere durch Laserschweißen, und die erste elektrische Verbindungslasche (20) an das erste Stützelement durch eine Materialverbindung fixiert ist, insbesondere durch Laserschweißen,
und/oder
das erste gemeinsame Verbindungselement (26) an die zweite elektrische Verbindungslasche (24) durch eine Materialverbindung fixiert ist, insbesondere durch Laserschweißen, und die zweite elektrische Verbindungslasche (24) an das zweite Stützelement durch eine Materialverbindung fixiert ist, insbesondere durch Laserschweißen.

6. Elektrochemische Anordnung nach einem der vorhergehenden Ansprüche, wobei das erste gemeinsame Verbindungselement (26) einen elektrischen Verbindungskern (32) umfasst, der zwischen der ersten elektrischen Verbindungsrippe und der zweiten elektrischen Verbindungsrippe angeordnet ist.

7. Elektrochemische Anordnung nach Anspruch 6, wobei der elektrische Verbindungskern (32) abgestuft ist und einen Klemmenabschnitt (36) und einen Verbindungsabschnitt (34) umfasst, wobei der Klemmenabschnitt hin zum Stapel von elektrochemischen Elementen mit Bezug auf den Verbindungsabschnitt versetzt ist.

8. Elektrochemische Anordnung nach einem der Ansprüche 1 bis 7, wobei
die erste elektrische Verbindungsrippe (28) und die zweite elektrische Verbindungsrippe (30) zwischen der ersten und der zweiten elektrischen Verbindungslasche angeordnet sind, und wobei
die erste elektrische Verbindungslasche und die zweite elektrische Verbindungslasche zwischen dem ersten und dem zweiten Stützelement angeordnet sind.

9. Elektrochemische Anordnung nach einem der Ansprüche 2 bis 7, wobei das erste Stützelement (42) und das zweite Stützelement (44) zwischen der ersten und der zweiten elektrischen Verbindungslasche angeordnet sind, und wobei
die erste elektrische Verbindungslasche (20) und die zweite elektrische Verbindungslasche (24) zwischen der ersten elektrischen Verbindungsrippe und der zweiten elektrischen Verbindungsrippe angeordnet sind.

10. Elektrochemische Anordnung nach einem der vorhergehenden der Ansprüche, wobei
der erste Stapel von elektrochemischen Elementen mit einer dritten elektrischen Verbindungslasche (60) mit einer zweiten Polarität ausgestattet ist, und,
der zweite Stapel von elektrochemischen Elementen mit einer vierten elektrischen Verbindungslasche (64) mit der zweiten Polarität ausgestattet ist,
wobei die elektrochemische Anordnung ein zweites gemeinsames Verbindungselement (66) umfasst, dass die dritte elektrische Verbindungslasche und die vierte elektrische Verbindungslasche elektrisch verbindet und ausgelegt ist, um die dritte elektrische Verbindungslasche mit der vierte elektrische Verbindungslasche mit einer elektrischen Verbindungsklemme (16) mit der zweiten Polarität zu verbinden,
wobei das zweite gemeinsame Verbindungselement Folgendes umfasst:
eine dritte elektrische Verbindungsrippe (68), die an die dritte elektrische Verbindungslasche fixiert ist, und
eine vierte elektrische Verbindungsrippe (70), die an die vierte elektrische Verbindungslasche fixiert ist, wobei
die elektrochemische Anordnung ein zweites Stützorgan (80) umfasst, das ein drittes Stützelement (82) und ein viertes Stützelement (84) bildet, und das mindestens einen zentralen Kern (86) umfasst, der zwischen dem dritten Stützelement und dem vierten Stützelement angeordnet ist, wobei
die dritte elektrische Verbindungslasche zwischen der dritten elektrischen Verbindungsrippe (68) und dem dritten Stützelement (82) angeordnet ist, und
die vierte elektrische Verbindungslasche zwischen der vierten elektrischen Verbindungsrippe (70) und dem vierten Stützelement (84) angeordnet ist, und insbesondere wobei
die dritte elektrische Verbindungslasche (60) und die dritte elektrische Verbindungsrippe sich im Wesentlichen parallel zu der Stapelebene (PE) erstrecken, und
die vierte elektrische Verbindungslasche (64) und die vierte elektrische Verbindungsrippe sich im Wesentlichen parallel zu der Stapelebene (PE) erstrecken.

11. Elektrochemische Anordnung nach Anspruch 10, wobei das erste gemeinsame Verbindungselement (26) und das zweite gemeinsame Verbindungselement (66) eine identische Form aufweisen und gemäß einer Ebenensymmetriekonfiguration mit Bezug auf eine Symmetrieebene (PT) angeordnet sind.

12. Batterie der Art, umfassend
- ein Gehäuse (4),
- einen Deckel (6), der mit einer elektrischen Verbindungsklemme (14) mit einer ersten Polarität und vorzugsweise einer elektrischen Verbindungsklemme (16) mit einer zweiten Polarität ausgestattet ist,
- eine elektrochemische Anordnung (8),
**dadurch gekennzeichnet, dass**
die elektrochemische Anordnung (8) eine elektrochemische Anordnung nach einem der vorhergehenden Ansprüche ist, und dadurch, dass
das erste gemeinsame Verbindungselement (26) mit der elektrischen Verbindungsklemme (14) mit der ersten Polarität elektrisch verbunden ist.

13. Verfahren zur Herstellung einer elektrochemischen Anordnung nach einem der Ansprüche 1 bis 11, umfassend die folgenden Schritte:
- Liefern des ersten Stapels von elektrochemischen Elementen (18), der mit der elektrischen Verbindungsklemme (20) mit der ersten Polarität ausgestattet ist,
- Liefern des ersten gemeinsamen Verbindungselements (26), das ausgelegt ist, um die erste elektrische Verbindungslasche elektrisch mit der elektrischen Verbindungsklemme (14) mit der ersten Polarität zu verbinden,
- Anordnen der ersten elektrischen Verbindungslasche (20) zwischen der ersten elektrischen Verbindungsrippe (28) und dem ersten Stützelement (42), und
- Befestigen und Verbinden der ersten elektrischen Verbindungsrippe (28) und des ersten Stützelements (42) mit der ersten elektrischen Verbindungslasche.

## Claims

1. An electrochemical assembly of the type comprising
a first stack of electrochemical elements (18) provided with a first electrical connection tab (20) with a first polarity,
the first stack of electrochemical elements extending along a stacking plane (PE),
a first common connection element (26) adapted to electrically connect the first electrical connection tab to an electrical connection terminal (14) with the first polarity,
the first common connection element comprising a first electrical connection rib (28) fastened to the first electrical connection tab,
the electrochemical assembly comprising a first support element (42),
the first electrical connection tab (20) being arranged between the first electrical connection rib (28) and the first support element (42),
the electrochemical assembly comprising
a second stack of electrochemical elements (22) provided with a second electrical connection tab (24) with the first polarity,
the second stack of electrochemical elements extending along the stacking plane (PE),
the first common connection element (26) electrically connecting the first electrical connection tab and the second electrical connection tab and is suitable for connecting the second electrical connection tab to the electrical connection terminal (14) with the first polarity,
the first common connection element (26) comprising a second electrical connection rib (30) fastened to the second electrical connection tab,
the electrochemical assembly comprising a second support element (44),
the second electrical connection tab being arranged between the second electrical connection rib and the second support element,
**characterized in that**
the electrochemical assembly comprises a first support element (40) which forms the first support element and the second support element and which comprises at least one central core (46) arranged between the first support element and the second support element.

2. The electrochemical assembly according to claim 1, wherein the first electrical connection tab and the first electrical connection rib extend substantially parallel to the stacking plane (PE).

3. The electrochemical assembly according to claim 1 or 2, wherein the second electrical connection tab and the second electrical connection rib extend substantially parallel to the stacking plane (PE).

4. The electrochemical assembly according to any of claims 1 to 3, wherein the central core is arranged either substantially perpendicular or substantially parallel to a support plane (PS) defined by the first support element and the second support element.

5. The electrochemical assembly according to any of claims 1 to 4, wherein
the first common connection element (26) is fastened to the first electrical connection tab (20) by a material connection, in particular by laser welding, and the first electrical connection tab (20) is fastened to the first support element by a material connection, in particular by laser welding,
and/or
the first common connection element (26) is fastened to the second electrical connection tab (24) by a material connection, in particular by laser welding, and the second electrical connection tab (24) is fastened to the second support element by a material connection, in particular by laser welding.

6. The electrochemical assembly according to any of the preceding claims, wherein the first common connection element (26) comprises an electrical connection core (32) arranged between the first electrical connection rib and the second electrical connection rib.

7. The electrochemical assembly according to claim 6, wherein the electrical connection core (32) is stepped and comprises a terminal portion (36) and an end portion (34), the terminal portion being offset toward the stack of electrochemical elements with respect to the end portion.

8. The electrochemical assembly according to any of claims 1 to 7, wherein
the first electrical connection rib (28) and the second electrical connection rib (30) are arranged between the first and the second electrical connection tabs, and wherein
the first electrical connection tab and the second electrical connection tab are arranged between the first and the second support elements.

9. The electrochemical assembly according to any one of claims 2 to 7, wherein the first support element (42) and the second support element (44) are arranged between the first and the second electrical connection tabs, and wherein
the first electrical connection tab (20) and the second electrical connection tab (24) are arranged between the first electrical connection rib and the second electrical connection rib.

10. The electrochemical assembly, according to any of the preceding claims, wherein
the first stack of electrochemical elements is provided with a third electrical connection tab (60) with a second polarity, and
the second stack of electrochemical elements is provided with a fourth electrical connection tab (64) with the second polarity,
the electrochemical assembly comprising a second common connecting element (66), electrically connecting the third electrical connection tab and the fourth electrical connection tab and suitable for electrically connecting the third electrical connection tab and the fourth electrical connection tab to an electrical connection terminal (16) with the second polarity,
the second common connecting element comprises
a third electrical connection rib (68) fastened to the third electrical connection tab, and
a fourth electrical connection rib (70) fastened to the fourth electrical connection tab, wherein
the electrochemical assembly comprises a second support component (80) which forms a third support element (82) and a fourth support element (84) and which comprises at least one central core (86) arranged between the third support element and the fourth support element, wherein
the third electrical connection tab is arranged between the third electrical connection rib (68) and the third support element (82), and
the fourth electrical connection tab is arranged between the fourth electrical connection rib (70) and the fourth support element (84), and in particular wherein
the third electrical connection tab (60) and the third electrical connection rib extend substantially parallel to the stacking plane (PE) and
the fourth electrical connection tab (64) and the fourth electrical connection rib extend substantially parallel to the stacking plane (PE).

11. The electrochemical assembly according to claim 10, wherein the first common connecting element (26) and the second common connecting element (66) have an identical shape and are arranged according to a plane symmetry configuration with respect to a plane of symmetry (PT).

12. A battery, of the type comprising
- a casing (4),
- a cover (6) provided with an electrical connection terminal (14) with a first polarity and preferentially with an electrical connection terminal (16) with a second polarity
- an electrochemical assembly (8),
**characterized in that**
the electrochemical assembly (8) is an electrochemical assembly according to any of the preceding claims, and **in that**
the first common connection element (26) is electrically connected to the electrical connection terminal (14) with the first polarity.

13. The manufacturing process for an electrochemical assembly according to any of claims 1 to 11, comprising the following steps:
- providing the first stack of electrochemical elements (18) provided with the first electrical connection tab (20) with the first polarity,
- providing the first common connection element (26) suitable for electrically connecting the first electrical connection tab to the electrical connection terminal (14) with the first polarity,
- arranging the first electrical connection tab (20) between the first electrical connection rib (28) and the first support element (42), and
- fastening and connecting the first electrical connection rib (28) and the first support element (42) to the first electrical connection tab.
